# EUROPEAN PATENT APPLICATION

(11) **EP 4 700 691 A1**
(43) Date of publication of application: **25.02.2026**
(21) Application number: 24792577.9
(22) Date of filing: 10.04.2024
(51) Int. Cl.: G06Q 50/10, G06Q 10/0833

(54) **HISTORY MANAGEMENT DEVICE AND COMMUNICATION SYSTEM**

(30) Priority: 20.04.2023 JP 2023069559
(71) Applicant: DAIKIN INDUSTRIES, LTD., Osaka-Shi, Osaka 530-0001 (JP)
(72) Inventor: IKEMIYA, Makoto, Osaka-Shi, Osaka 530-0001 (JP)
(74) Representative: Hoffmann Eitle
(86) International application number: PCT/JP2024/014499
(87) International publication number: WO 2024/219302

(57) **Abstract**

An object of the present disclosure is to implement traceability of components of a refrigeration apparatus provided in a container to be transported.

Accordingly, the present disclosure is a record management apparatus (7) for managing a record of a change relating to a refrigeration apparatus provided in a container (C) to be transported, the record management apparatus (7) including a communication unit (71) configured to acquire first component identification information for identifying a predetermined type of a component included in the refrigeration apparatus at a first time point and second component identification information for identifying the predetermined type of the component forming the refrigeration apparatus at a second time point after the first time point; and a control unit (70) configured to implement control to determine whether the second component identification information has been changed from the first component identification information.

## Description

### Technical Field

The present disclosure relates to a record management apparatus and a communication system.

### Background Art

By providing a refrigeration apparatus for cooling the interior of a container in a container for sea transportation or land transportation, it is possible to transport a package including food, chemicals, medicine, etc., for a long time. Further, conventionally, by using a communication system, there is a proposal that a management center centrally manages the distribution record of the packages in the container and implements the traceability of the packages (see Patent Document 1). Thus, even if a problem occurs regarding the quality of the package, the management center or the like can carry out a back-trace or tracking investigation of the package, and can address the problem. Further, the components of the refrigeration apparatus that cools the interior of the container may be replaced during transportation.

### Citation List

### Patent Document

Patent document 1: Japanese Unexamined Patent Application Publication No. 2019-516162

### Summary of Invention

### Technical Problem

However, it is difficult for the manufacturer of the refrigeration apparatus to identify where the component was replaced. Therefore, if the component was replaced with a component other than the genuine component, and the refrigeration apparatus breaks down because of this, and a problem occurs in the package, it is difficult for the manufacturer of the refrigeration apparatus to identify the cause.

It is an object of the present disclosure to implement traceability concerning components of a refrigeration apparatus provided in a container to be transported in consideration of the above circumstances.

### Solution to Problem

(1) The first aspect of the present disclosure is a record management apparatus for managing a record of a change relating to a refrigeration apparatus provided in a container to be transported, the record management apparatus including a communication unit configured to acquire first component identification information for identifying a predetermined type of a component included in the refrigeration apparatus at a first time point and second component identification information for identifying the predetermined type of the component forming the refrigeration apparatus at a second time point after the first time point; and a control unit configured to implement control to determine whether the second component identification information has been changed from the first component identification information.

According to the first aspect, traceability concerning components of a refrigeration apparatus provided in a container to be transported can be implemented.

(2) The second aspect of the present disclosure is the record management apparatus according to the first aspect, wherein when the second component identification information has been changed from the first component identification information, the control unit determines that the predetermined type of the component has been replaced.

According to the second aspect, based on the fact that the second component identification information has been changed from the first component identification information, it can be determined that a predetermined type of component has been replaced at the second time point.

(3) The third aspect of the present disclosure is the record management apparatus according to the first or second aspect, wherein the communication unit acquires first time point information indicating the first time point together with the first component identification information, and acquires second time point information indicating the second time point together with the second component identification information, and the control unit determines whether the second component identification information has been changed from the first component identification information based on a before-after relationship between the first time point and the second time point.

According to the third aspect, based on the before-after relationship between the first time point and the second time point, it can be determined whether the second component identification information has been changed from the first component identification information.

(4) The fourth aspect of the present disclosure is the record management apparatus according to any one of the first to third aspects, further including a storage unit configured to store the first component identification information and the second component identification information acquired by the communication unit.

According to the fourth aspect, it is possible to implement traceability regarding components of a refrigeration apparatus provided in a container to be transported.

(5) The fifth aspect of the present disclosure is the record management apparatus according to the fourth aspect, wherein when the second component identification information has been changed from the first component identification information and the communication unit has not acquired production information relating to production of a predetermined component indicated by the second component identification information, the communication unit acquires the production information from a production information management apparatus configured to manage the production information of each component; and the storage unit stores the production information in association with the second component identification information.

According to the fifth aspect, even when the record management apparatus 7 does not manage the production information, the production information can be obtained from the production information management apparatus.

(6) The sixth aspect of the present disclosure is the record management apparatus according to the fifth aspect, wherein the production information includes information indicating a place where the predetermined component was replaced, a date and time when the predetermined component was replaced, a replacing person who replaced the predetermined component, or a place where the predetermined component was stored.

According to the sixth aspect, detailed information of the component can be obtained from the production information.

(7) The seventh aspect of the present disclosure is the record management apparatus according to the fourth aspect, wherein when the second component identification information has been changed from the first component identification information and the communication unit has not acquired production information related to production of a predetermined component indicated by the second component identification information, the communication unit makes a request for the production information to a production information management apparatus configured to manage the production information of each component, and when the communication unit cannot acquire the production information in response to the request, the storage unit stores a predetermined flag in association with the second component identification information.

According to the seventh aspect, it is possible to recognize that the component is not genuine or the like by a predetermined flag.

(8) The eight aspect of the present disclosure is the record management apparatus according to any one of the first to sixth aspects, wherein the communication unit acquires the second component identification information transmitted by a communication apparatus provided in the container or in a mobile body loaded with the container.

According to the eight aspect, the second component identification information can be acquired even during transportation of the container.

(9) The ninth aspect of the present disclosure is the record management apparatus according to any one of the first to seventh aspects, wherein the communication unit acquires the second component identification information transmitted by a communication apparatus provided at a gate through which a mobile body mounted with the container passes.

According to the ninth aspect, the second component identification information can be automatically acquired at the gate even during transportation of the container.

(10) The tenth aspect of the present disclosure is a communication system including a communication apparatus configured to be installed in the container or a mobile body mounted with the container, and to transmit the second component identification information; and the record management apparatus according to any one of the first to seventh aspects.

According to the tenth aspect, it is possible to implement traceability regarding components of a refrigeration apparatus provided in a container to be transported.

(11) The eleventh aspect of the present disclosure is the communication system according to the tenth aspect, further including a transfer apparatus configured to be installed in the container or the mobile body loaded with the container, to read, by short-range radio communication, the second component identification information from a radio tag in which the second component identification information is written, and to transmit the second component identification information to the communication apparatus.

According to the eleventh aspect, it is possible to implement traceability regarding components of a refrigeration apparatus provided in a container to be transported.

(12) The twelfth aspect of the present disclosure is the communication system according to the eleventh aspect, wherein the radio tag is an RFID tag that can be attached to the predetermined type of the component, the refrigeration apparatus, or the container, and in which the second component identification information is written.

According to the twelfth aspect, component identification can be automatically performed by RFID.

(13) The thirteenth aspect of the present disclosure is the record management apparatus according to the first aspect, wherein the communication unit acquires the second component identification information transmitted by a communication terminal that has read the second component identification information from an identification image in which the second component identification information is embedded.

According to the thirteenth aspect, it is possible to implement traceability of components of a refrigeration apparatus provided in a container to be transported.

### Brief Description of Drawings

[FIG. 1] FIG. 1 is an overall configuration diagram of a communication system according to an embodiment.
[FIG. 2] FIG. 2 is a longitudinal cross-sectional view in the front-rear direction of a refrigeration apparatus according to an embodiment.
[FIG. 3] FIG. 3 is a perspective view of the refrigeration apparatus viewed from the front.
[FIG. 4] FIG. 4 is a piping system diagram of the refrigeration apparatus.
[FIG. 5] FIG. 5 is a schematic diagram of the refrigeration apparatus.
[FIG. 6] FIG. 6 is a schematic diagram of a transfer apparatus.
[FIG. 7] FIG. 7 is a schematic diagram of a communication apparatus.
[FIG. 8] FIG. 8 is a schematic diagram of a reading apparatus.
[FIG. 9] FIG. 9 is a schematic diagram of a worker terminal.
[FIG. 10] FIG. 10 is a schematic diagram of a record management apparatus.
[FIG. 11] FIG. 11 is a conceptual diagram of a component data management table.
[FIG. 12] FIG. 12 is a conceptual diagram of component data.
[FIG. 13] FIG. 13 is a schematic diagram of a production information management apparatus.
[FIG. 14] FIG. 14 is a conceptual diagram of a production information management table.
[FIG. 15] FIG. 15 is a sequence diagram illustrating component data registration processing in the initial stage or repair stage.
[FIG. 16] FIG. 16 is a sequence diagram illustrating component data registration processing in the container transportation stage.
[FIG. 17] FIG. 17 is a conceptual diagram of component data transmitted in the container transportation stage.
[FIG. 18] FIG. 18 is a sequence diagram illustrating component data registration processing in the transportation stage where a truck loaded with the container passes through a centralized management gate.
[FIG. 19] FIG. 19 is a conceptual diagram of component data transmitted in the transportation stage where the truck loaded with the container passes through the centralized management gate.
[FIG. 20] FIG. 20 is a flowchart illustrating component replacement record analysis processing.
[FIG. 21] FIG. 21 is a flowchart illustrating component replacement record analysis processing.
[FIG. 22] FIG. 22 is a diagram illustrating analysis results.

### Description of Embodiments

Embodiments will be described below with reference to drawings. The present disclosure is not limited to the embodiments described below, and various changes may be made within the scope of not deviating from the technical concept of the present disclosure. Because the drawings are intended to explain the present disclosure conceptually, the dimensions, ratios, or numbers may be exaggerated or simplified as necessary for ease of understanding.

### [Overall configuration of communication system]

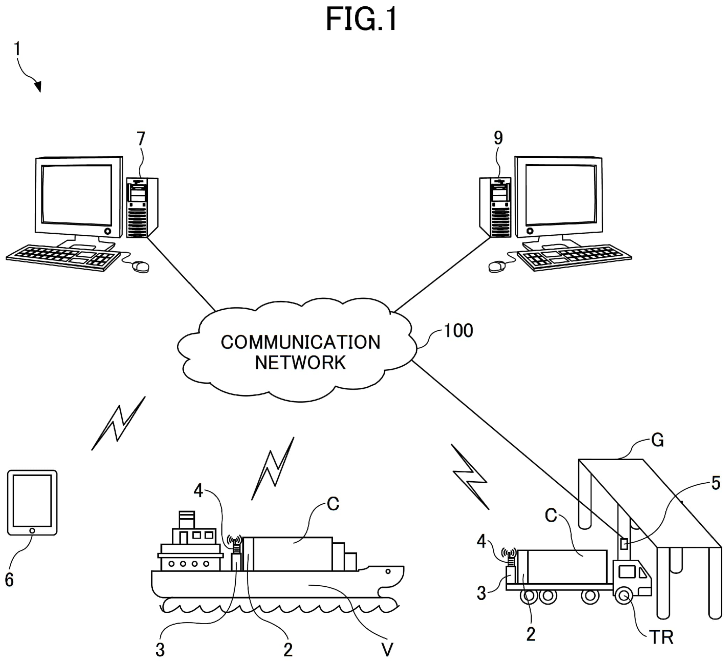

First, the overall configuration of a communication system 1 of the present embodiment will be described with reference to FIG. 1. FIG. 1 is an overall configuration diagram of the communication system according to the present embodiment.

As illustrated in FIG. 1, the communication system 1 of the present embodiment is constructed by a refrigeration apparatus 2, a transfer apparatus 3, a communication apparatus 4, a reading apparatus 5, a worker terminal 6, a record management apparatus 7, and a production information management apparatus 9. The communication apparatus 4, the reading apparatus 5, the worker terminal 6, the record management apparatus 7, and the production information management apparatus 9 are all composed of computers, and can communicate by connecting them to a communication network 100 such as the Internet. The connection mode between the communication apparatus 4 and the communication network 100 is wireless. The connection mode between the reading apparatus 5, the worker terminal 6, the record management apparatus 7, and the production information management apparatus 9, and the communication network 100, can be either wireless or wired. Because the communication apparatus 4 connects to the communication network not only from land but also from sea, the Internet may be a satellite (space) Internet. The record management apparatus 7 and the production information management apparatus 9 are composed of a single computer or a plurality of computers.

The refrigeration apparatus 2 is installed across the exterior of the container C to the interior of the container C to cool the air inside the container C. A wireless tag T in which component data including component identification information for identifying each component is written, is attached to each predetermined component of the refrigeration apparatus 2. The wireless tag T is a generic name for the wireless tags T1, T2, and T3 described later. The component data will be described later in detail. Because the refrigeration apparatus 2 is installed across the exterior of the container C to the interior of the container C, there are radio tags T attached to components inside the container C and radio tags T attached to components outside the container C. Packages including food, chemicals, medicine, etc., are stored in the container C and transported by sea by a ship V or by land by a truck TR.

The transfer apparatus 3 is installed outside the container C, reads component data from the radio tag T inside or outside the container C by short-range radio communication, and transmits the component data to the communication apparatus 4 by (medium-range) radio communication. For short-range radio communication, RFID (Radio Frequency Identifier) is used, for example. If there is no obstacle, communication up to approximately 7 m is usually possible. For (medium-range) radio communication from the transfer apparatus 3 to the communication apparatus 4, for example, Wi-Fi is used. If there is no obstacle, communication up to approximately 500 m is usually possible. Further, wired communication using a cable may be used from the transfer apparatus 3 to the communication apparatus 4. In this case, the transfer apparatus 3 is mounted on a modem.

Note that component data including component identification information for identifying components of the refrigeration apparatus 2 inside or outside the container C may be written to the transfer apparatus 3 instead of the wireless tag T.

The communication apparatus 4 is installed outside the container C, on the ship V or on the truck TR, and can communicate with the transfer apparatus 3 by (medium-range) wireless communication. The communication apparatus 4 is equipped with a wireless modem and can communicate with the record management apparatus through the communication network 100 by (long-range) wireless communication. Thus, for example, component data written to the wireless tag T inside or outside the container C is transmitted to the record management apparatus 7 through the transfer apparatus 3, the communication apparatus 4 and the communication network 100. The communication apparatus 4 may have the function of the transfer apparatus 3.

The reading apparatus 5 is installed at the centralized management gate G through which the truck TR loaded with the container C passes when the container C is shipped or unloaded, and can communicate with the wireless tag T outside the container C by short-range wireless communication. The reading apparatus 5 may be able to communicate with the transfer apparatus 3 by (medium-range) wireless communication.

Thus, when the truck TR passes through the centralized management gate G, for example, the component data written in the radio tag T outside the container C is directly read by the reading apparatus 5 and transmitted to the record management apparatus 7 via the communication network 100. Alternatively, the component data written in the radio tag T outside the container C is transmitted to the reading apparatus 5 via the transfer apparatus 3 and transmitted from the reading apparatus 5 via the communication network 100 to the record management apparatus 7. When the radio tag T is inside the container C, the radio wave strength from the inside to the outside is weak, so the component data written in the radio tag T inside the container C is transmitted to the reading apparatus 5 via the transfer apparatus 3 and transmitted from the reading apparatus 5 via the communication network 100 to the record management apparatus 7.

The worker terminal 6 is a kind of communication terminal used in the production factory or the repair factory of the refrigeration apparatus 2, and when the refrigeration apparatus 2 is produced or the component of the refrigeration apparatus 2 is replaced, the component data of the component is input by the worker, and this component data is transmitted to the record management apparatus 7 via the communication network 100. Note that the replacement of the component of the refrigeration apparatus 2 includes a case in which, even if the component is not replaced when a worker repairs the component, the component identification information is replaced, and thereafter, the component is managed as another component.

In the above example, the radio tag T in which the component data is written is used, but the embodiment is not limited thereto. For example, instead of the radio tag T, an identification image in which the component data is embedded may be directly printed on the component of the refrigeration apparatus 2, or a seal on which the identification image is printed may be affixed. A recognition image is, for example, a two-dimensional code such as a QR code (registered trademark) or a bar code. Further, a plate printed with one or more identification images in which component data of all or some of the components of the refrigeration apparatus 2 are compiled, may be affixed to a predetermined position of the refrigeration apparatus 2. Further, a sticker printed with one or more identification images in which component data of all or some of components of the refrigeration apparatus 2 are compiled, may be affixed to a predetermined position of the refrigeration apparatus 2.

In this case, in the production factory or the repair factory, the worker reads the component data embedded in the recognition image by using the worker terminal 6, and transmits the component data from the worker terminal 6 to the record management apparatus 7 via the communication network 100. In the centralized management gate G, the worker inspecting the container C reads the component data embedded in the recognition image by using the worker terminal 6, and transmits the component data from the worker terminal 6 to the record management apparatus 7 via the communication network 100.

The record management apparatus 7 manages the component data transmitted from the communication apparatus 4, the reading apparatus 5, and the worker terminal 6 via the communication network 100. Further, the record management apparatus 7 determines whether the component identification information included in the component data of the predetermined type of component has been changed, and if it has been changed, the record management apparatus 7 determines that the predetermined type of component has been replaced. Thus, the manager of the record management apparatus 7 can identify the state of the components of the refrigeration apparatus 2 by confirming the component data managed by the record management apparatus 7 or the determination result obtained by the record management apparatus 7. The manager of the record management apparatus 7 may be a manufacturer of the refrigeration apparatus 2 or an affiliated company of the manufacturer.

The production information management apparatus 9 manages production information related to the production of each predetermined component that is a genuine component of the producer or a component approved by the producer, and transmits predetermined production information corresponding to the request to the record management apparatus 7 in response to a request from the record management apparatus 7. The production information includes, for example, information indicating the place where the component was replaced, information indicating the date and time when the component was replaced, information indicating a replacing person who replaced the component, or information indicating the place where the component was stored. Here, the production information is information for determining whether each component is a genuine component of the producer or a component recognized by the producer. Here, the producer is, for example, the manufacturer of the refrigeration apparatus 2.

### [Configuration of communication system]

Next, the configuration of each of the refrigeration apparatus 2, the transfer apparatus 3, the communication apparatus 4, the worker terminal 6, the record management apparatus 7, and the production information management apparatus 9 constructing the communication system 1 will be described with reference to the figures.

### <Configuration of refrigeration apparatus>

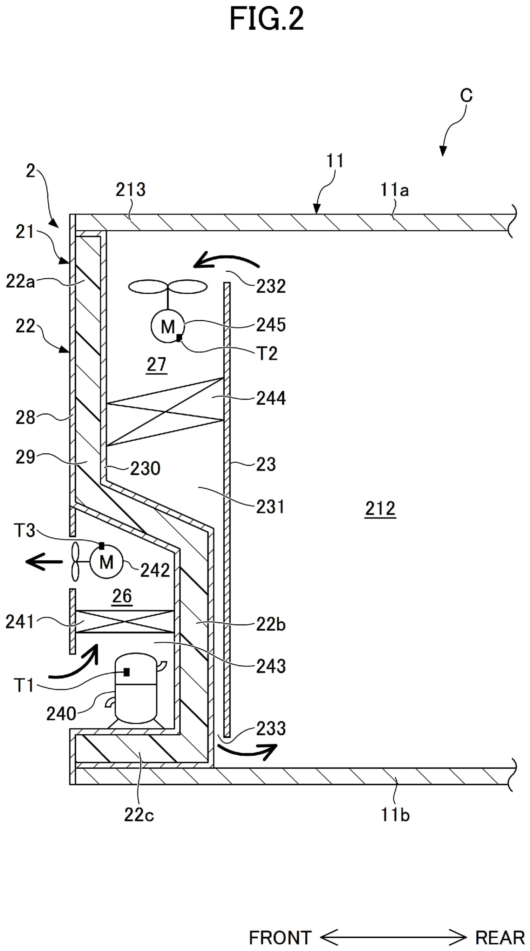

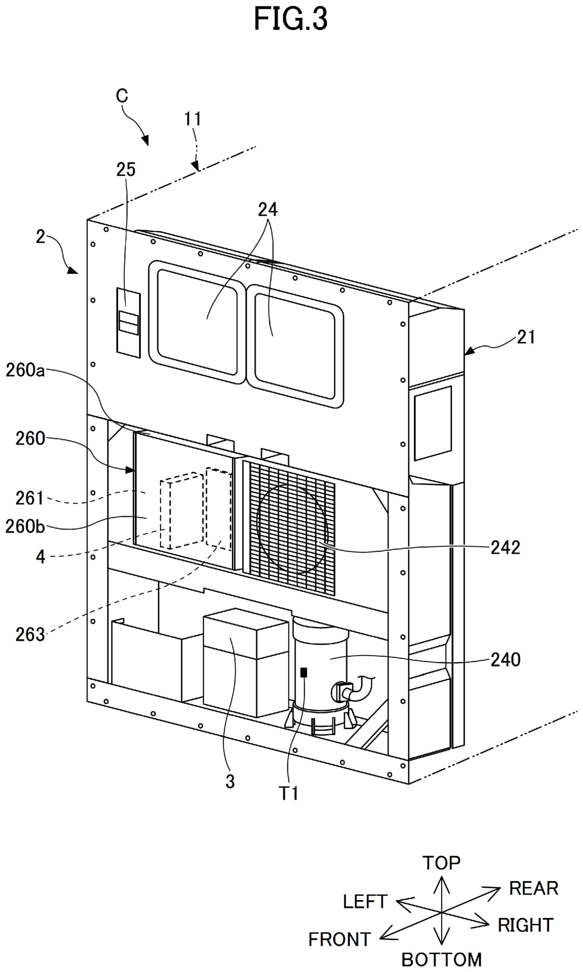

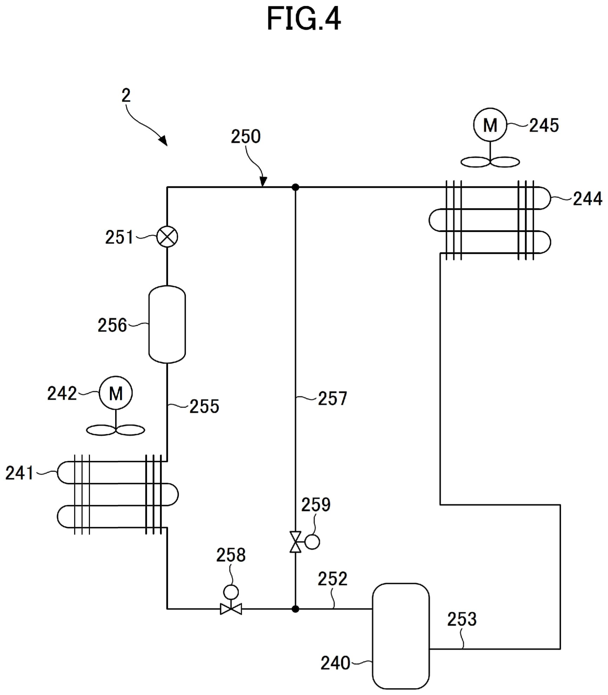

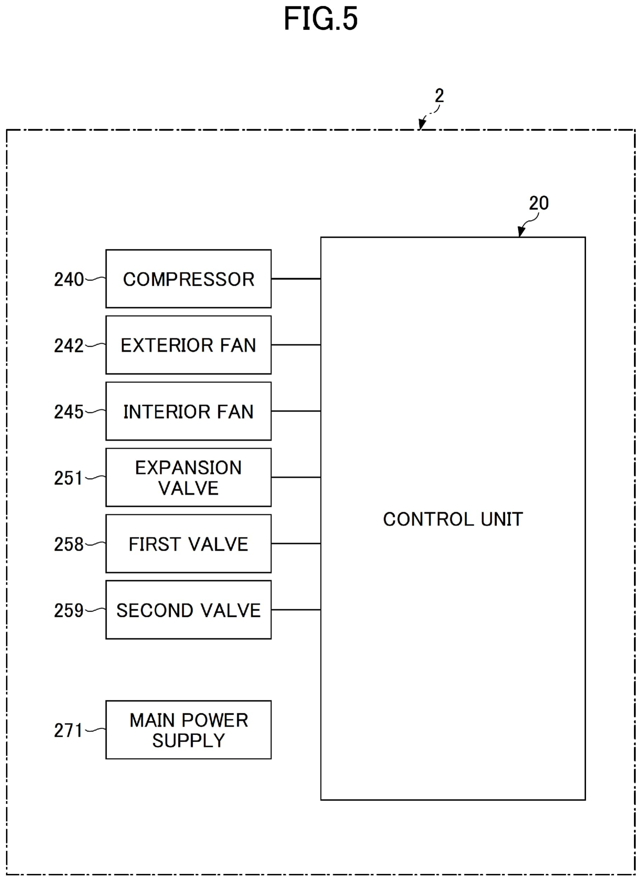

First, the configuration of the refrigeration apparatus will be described with reference to FIGS. 2 to 5. FIG. 2 is a longitudinal cross-sectional view along the front-rear direction of the refrigeration apparatus according to the embodiment. FIG. 3 is a perspective view of the refrigeration apparatus viewed from the front side. FIG. 4 is a piping system diagram of the refrigeration apparatus. FIG. 5 is a schematic configuration diagram of the refrigeration apparatus. In the following description, the words "front", "rear", "left", "right", "top", and "bottom" refer to the direction indicated by the arrows in FIG. 3. Because the refrigeration apparatus 2 is closely related to the container C, the overall configuration of the container will be described first.

### (1) Overall configuration of the container

The container C is used for sea transportation and land transportation. The container C is a refrigeration container having a function of cooling the air inside. The container C has a container body 11 and the refrigeration apparatus 2 for the container. The container body 11 stores foodstuffs, chemicals, medicines, etc. The refrigeration apparatus 2 cools an interior space 212 of the container body 11. Hereinafter, the interior space 212 may be referred to as the interior of the container and the space outside the container body 11 may be referred to as the exterior of the container. As illustrated in FIG. 2, an opening 213 is formed in the front face of the container body 11. The refrigeration apparatus 2 is attached to the container body 11 so as to close the opening 213 of the container body 11.

### (2) The refrigeration apparatus

The refrigeration apparatus 2 has a casing 21. The casing 21 constitutes a lid of the opening 213 of the container body 11. The casing 21 has a casing body 22 and a partition plate 23. The casing body 22 partitions the interior and exterior of the container body 11. The partition plate 23 is arranged so as to be located in the interior space 212 on the back side (rear side) of the casing 21.

The refrigeration apparatus 2 has a compressor 240, an exterior heat exchanger 241, and an exterior fan 242 as components (elements) arranged in the exterior of the refrigeration apparatus. The refrigeration apparatus 2 has an interior heat exchanger 244 and an interior fan 245 as components (elements) arranged in the interior of the refrigeration apparatus.

### (2-1) Casing body

As illustrated in FIG. 2, the casing body 22 has a flat plate portion 22a and a recess portion 22b. The flat plate portion 22a is formed on the upper portion of the casing body 22 so as to be substantially flush with the opening 213 of the casing 21. As illustrated in FIG. 3, two inspection windows 24 are formed in the middle portion of the flat plate portion 22a in the left-right direction. The inspection window 24 is a transparent window for checking the inside of the casing body 22. A ventilator 25 is provided to the left of the inspection window 24. The ventilator 25 ventilates the interior of the casing.

The recess portion 22b is formed in the lower part of the casing 21. The recess portion 22b is recessed backward from the lower end of the flat plate portion 22a. An exterior storage space 26 outside the casing is formed in the front side of the recess portion 22b. An interior storage space 27 inside the casing is formed above the recess portion 22b and between the flat plate portion 22a and the partition plate 23. The lower end of the recess portion 22b constitutes a bottom plate 22c. The bottom plate 22c extends over the left and right ends of the casing body 22.

The casing body 22 is formed by laminating an exterior casing 28, a heat insulating layer 29, and an interior casing 230 in the thickness direction (front-rear direction). The exterior casing 28 faces the exterior of the casing. The interior casing 230 faces the interior of the casing. The heat insulating layer 29 is provided between the exterior casing 28 and the interior casing 230. The exterior casing 28 is composed of an aluminum material. The interior casing 230 is composed of a reinforced fiber plastic (FRP). The heat insulating layer 29 is made of foamed resin.

### (2-2) Partition plate and air passage

The partition plate 23 is a plate-like member located on the rear side of the recess portion 22b. The partition plate 23 extends vertically so as to have a predetermined interval with the rear surface of the recess portion 22b. An internal passage 231 through which the interior air flows is formed between the casing body 22 and the partition plate 23. An inlet 232 is formed between the upper end of the partition plate 23 and the upper wall 11a of the container body 11. The inlet 232 communicates the interior space 212 with the inlet end of the internal passage 231. An outlet 233 is formed between the lower end of the partition plate 23 and the lower wall 11b of the container body 11. The outlet 233 communicates the interior space 212 with the outlet end of the internal passage 231.

### (2-3) Elemental components outside the container

The exterior storage space 26 is provided with a compressor 240, an exterior heat exchanger 241, and an exterior fan 242. The compressor 240 is installed on the bottom plate 22c of the casing 21. The compressor 240 is arranged near the bottom of the exterior storage space 26. The compressor 240 is arranged near the right of the exterior storage space 26.

The exterior fan 242 is located near the top of the exterior storage space 26. The exterior fan 242 is composed of a propeller fan. The exterior fan 242 has an impeller and a motor M for rotationally driving the impeller. As illustrated in FIG. 3, an external passage 243 through which the exterior air flows is formed on the back side of the exterior fan 242.

The exterior heat exchanger 241 is provided at a height between the exterior fan 242 and the compressor 240 in the exterior storage space 26. The exterior heat exchanger 241 is located in the external passage 243. The exterior heat exchanger 241 is a fin-and-tube type heat exchanger.

### (2-4) Element components in the container

The interior storage space 270 is provided with an interior heat exchanger 244 and an interior fan 245. The exterior heat exchanger 241 is supported by the casing 21 so as to extend over the casing body 22 and the partition plate 23. The interior heat exchanger 244 is a fin-and-tube type heat exchanger.

The internal fan 245 is arranged on the upstream side of the internal heat exchanger 244 in the internal passage 231. The internal fan 245 is positioned above the internal heat exchanger 244. The internal fan 245 is composed of a propeller fan. The internal fan 245 has an impeller and a motor for rotationally driving the impeller.

### (2-5) Configuration of the refrigerant circuit

As illustrated in FIG. 4, the refrigeration apparatus 2 has a refrigerant circuit 250. The refrigerant circuit 250 is filled with refrigerant. The refrigerant circuit 250 performs a vapor compression refrigeration cycle by circulating refrigerant. The refrigerant circuit 250 mainly includes a compressor 240, an exterior heat exchanger 241, an expansion valve 251, and an interior heat exchanger 244.

The compressor 240 compresses the inhaled refrigerant. The compressor 240 discharges the compressed refrigerant. A discharge pipe 252 is connected to the discharge part of the compressor 240. An inhale pipe 253 is connected to the inhale part of the compressor 240.

The exterior heat exchanger 241 exchanges heat between the refrigerant flowing inside and the exterior air. The gas end of the exterior heat exchanger 241 communicates with the discharge pipe 252. The liquid end of the exterior heat exchanger 241 is connected to the liquid end of the interior heat exchanger 244 via the liquid pipe 255. The exterior heat exchanger 241 functions as a radiator (condenser) for radiating refrigerant to air.

The expansion valve 251 is provided in the liquid tube 255. The expansion valve 251 reduces the pressure of high-pressure refrigerant to low-pressure refrigerant. The expansion valve 251 is an electronic expansion valve whose opening is adjustable. A receiver 256 is provided between the exterior heat exchanger 241 and the expansion valve 251 in the liquid tube 255. The receiver 256 is a container for storing excess refrigerant of the refrigerant circuit 250.

The interior heat exchanger 244 exchanges heat between the refrigerant flowing inside and the interior air. The gas end of the interior heat exchanger 244 communicates with the inhale pipe 253. The internal heat exchanger 244 functions as an evaporator of refrigerant for absorbing heat from air.

The refrigerant circuit 250 has a bypass pipe 257. The inlet end of the bypass pipe 257 communicates with the discharge pipe 252, and the outlet end of the bypass pipe 257 communicates with the liquid pipe 255. The bypass pipe 257 sends refrigerant discharged from the compressor 240 to the internal heat exchanger 244 by bypassing the external heat exchanger 241.

The refrigerant circuit 250 is provided with a first valve 258 and a second valve 259. The first valve 258 is provided between the discharge side of the compressor 240 and the gas end of the external heat exchanger 241, and downstream from the connection of the bypass pipe 257. The second valve 259 is provided in the bypass pipe 257. The first valve 258 and the second valve 259 are composed of electromagnetic switching valves. The first valve 258 and the second valve 259 may be a flow control valve whose opening is adjustable.

### (2-6) Electrical component box

As illustrated in FIG. 3, the casing 21 is provided with an electrical component box 260. The electrical component box 260 houses electrical components such as a control board 263, a power circuit board, a power supply terminal, and other electronic equipment. The electrical component box 260 is provided at an intermediate portion in the vertical direction of the casing 21. The electrical component box 260 has a box body 260a whose front side is opened, and a lid 260b which closes the open portion of the box body 260a. The box body 260a is formed in a hollow substantially rectangular parallelepiped shape. The lid 260b is fixed to the box body 260a via a hinge (not illustrated). The lid 260b is configured so that the front opening surface of the box body 260a can be opened and closed. A sealing member is provided between the electrical component box 260 and the lid 260b to prevent water and air from entering. The electrical component box 260 is made of a resin material.

The communication apparatus 4 and the control board 263 are accommodated in the first space 261 inside the electrical component box 260. The communication apparatus 4 is arranged in a substantially middle portion in the left-right direction in the first space 261. The external shape of the communication apparatus 4 is substantially rectangular parallelepiped with the left-right direction in the thickness direction.

The control board 263 is a printed circuit board on which a control circuit is mounted to control each device of the refrigeration apparatus 2. The control board 263 is also mounted with wiring for power supply or grounding. The control board 263 is arranged in what is referred to as a weak electric space in the first space 261. The control board 263 of this example is supported by the electrical component box 260 so that the thickness direction of the substrate is in the front-rear direction. The control board 263 is vertically elongated.

### (2-7) Control unit

As illustrated in FIG. 5, the refrigeration apparatus 2 includes a control unit 20. The control unit 20 controls the refrigeration apparatus 2. The control unit 20 includes the control board 263 described above and is arranged in the first space 261 inside the electrical component box 260. The control unit 20 includes a microprocessor, an electrical circuit, and an electronic circuit. The microprocessor includes a central processing unit (CPU), a memory, a communication interface, an analog input/output, and a contact input/output interface. The memory stores various programs to be executed by the CPU and data to be used by the programs.

The control unit 20 controls the ON/OFF switching of the compressor 240 and the rotational speed of the motor of the compressor 240. The control unit 20 controls the ON/OFF switching of the exterior fan 242 and the rotational speed of the motor of the exterior fan 242. The control unit 20 controls the ON/OFF switching of the interior fan 245 and the rotational speed of the motor of the interior fan 245. The control unit 20 controls the opening of the expansion valve 251. The control unit 20 controls the opening and closing states of the first valve 258 and the second valve 259.

The control unit 20 receives detection signals from a plurality of sensors. The plurality of sensors include a refrigerant temperature sensor, a refrigerant pressure sensor, and an air temperature sensor. The refrigerant temperature sensor includes a sensor for detecting the temperature of the refrigerant discharged from the compressor 240 and a sensor for detecting the temperature of the refrigerant inhaled to the compressor 240. The refrigerant pressure sensor includes a sensor for detecting high pressure of the refrigerant circuit 250 and a sensor for detecting low pressure of the refrigerant circuit 250. The air temperature sensor includes a sensor for detecting temperature of air on the inhaling side of the interior heat exchanger 244 and a sensor for detecting temperature of air on the blowing-out side of the interior heat exchanger 244.

### (2-8) Main power supply

As illustrated in FIG. 5, the refrigeration apparatus 2 has a main power supply 271. The main power supply 271 is a power supply for operating the refrigeration apparatus 2. The main power supply 271 supplies power to each device of the refrigeration apparatus 2. Specifically, the main power supply 271 supplies power to the compressor 240, the exterior fan 242, and the interior fan 245 via a power supply circuit. The main power supply 271 supplies power to the valves of the refrigerant circuit 250 including the first valve 258 and the second valve 259. The main power supply 271 supplies power to the control unit 20.

### (2-9) Radio tag and identification image

As illustrated in FIGS. 2 and 3, the above-mentioned radio tags T1, T2, and T3 are respectively attached to the predetermined components (the compressor 240, the internal fan 245, the exterior fan 242). The radio tag T is not limited to the components illustrated in FIGS. 2 and 3, but may be attached to other components. Instead of, or together with the radio tag T, the above-mentioned identification image such as a two-dimensional code may be printed. Further, as described above, a sticker on which the identification image is printed may be affixed instead of printing on the components.

### <Configuration of the transfer apparatus>

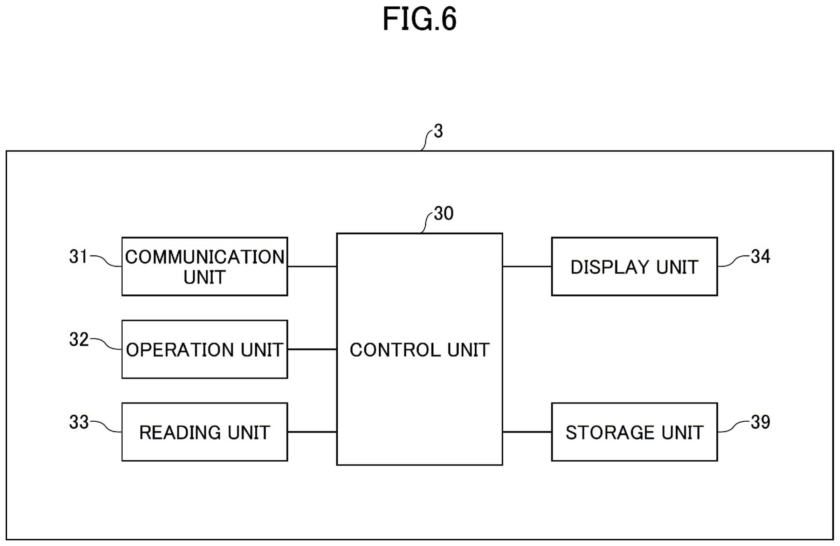

Next, a schematic configuration of the transfer apparatus 3 will be described with reference to FIG. 6. FIG. 6 is a schematic configuration diagram of the transfer apparatus. As illustrated in FIG. 3, the transfer apparatus 3 is installed outside the storage unit. In FIG. 3, as an example, the transfer apparatus 3 is installed near the compressor 240 which is a component.

As illustrated in FIG. 6, the transfer apparatus 3 has a control unit 30, a communication unit 31, an operation unit 32, a reading unit 33, a display unit 34, and a storage unit 39.

Of these, the control unit 30 controls the entire transfer apparatus 3 and is a computing device such as a CPU.

The communication unit 31 is a communication device for transmitting and receiving various kinds of information to and from the communication apparatus 4 by Wi-Fi or the like.

The operation unit 32 is a device for receiving operations from an operator and is a touch panel or the like.

The reading unit 33 is a device which writes various kinds of information into the wireless tag T and reads various kinds of information from the wireless tag T by short-range wireless communication such as RFID.

The display unit 34 is a display device for displaying a screen.

The storage unit 39 is a storage device such as a ROM (Read Only Memory), a RAM (Random Access Memory), an SSD (Solid State Drive), etc.

### <Configuration of communication apparatus>

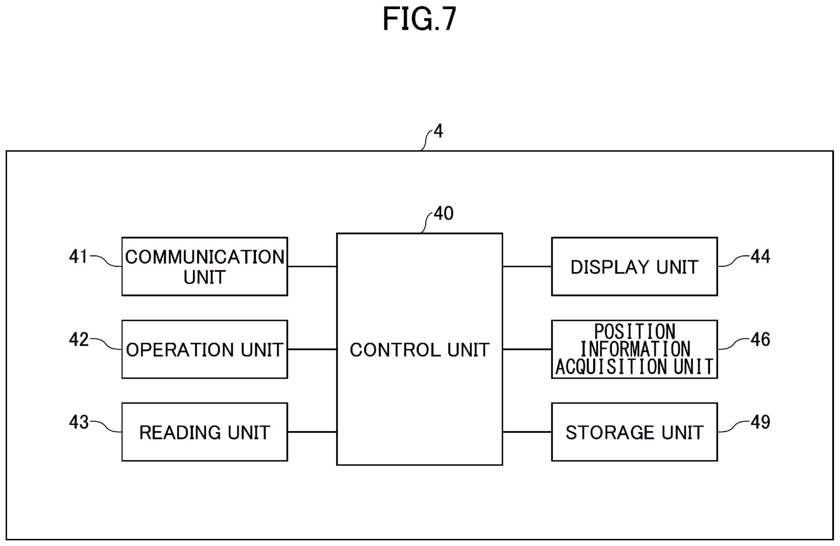

Next, a schematic configuration of the communication apparatus 4 will be described with reference to FIG. 7. FIG. 7 is a schematic configuration diagram of the communication apparatus.

As illustrated in FIG. 7, the communication apparatus 4 has a control unit 40, a communication unit 41, an operation unit 42, a reading unit 43, a display unit 44, a position information acquisition unit 46, and a storage unit 49.

Of these, the control unit 40 controls the entire communication apparatus 4 and is a computing device such as a CPU.

The communication unit 41 is a communication device for transmitting and receiving various kinds of information to and from other devices (a terminal, a server) via the communication network 100. The communication unit 41 can also transmit and receive various kinds of information to and from the transfer apparatus 3 by Wi-Fi or the like.

The operation unit 42 is a device for receiving operations from an operator and is a touch panel or the like.

The reading unit 43 is a device that writes various kinds of information into the wireless tag T or reads various kinds of information from the wireless tag T by short-range wireless communication such as RFID. The communication apparatus 4 may not have the reading unit 43.

The display unit 44 is a display device for displaying a screen.

The position information acquisition unit 46 is a device that identifies the position of the communication apparatus 4 in the world by acquiring a GNSS satellite signal from a GNSS (Global Navigation Satellite System) satellite.

The storage unit 49 is a storage device such as a ROM, a RAM, an SSD, or the like.

### <Configuration of the reading apparatus>

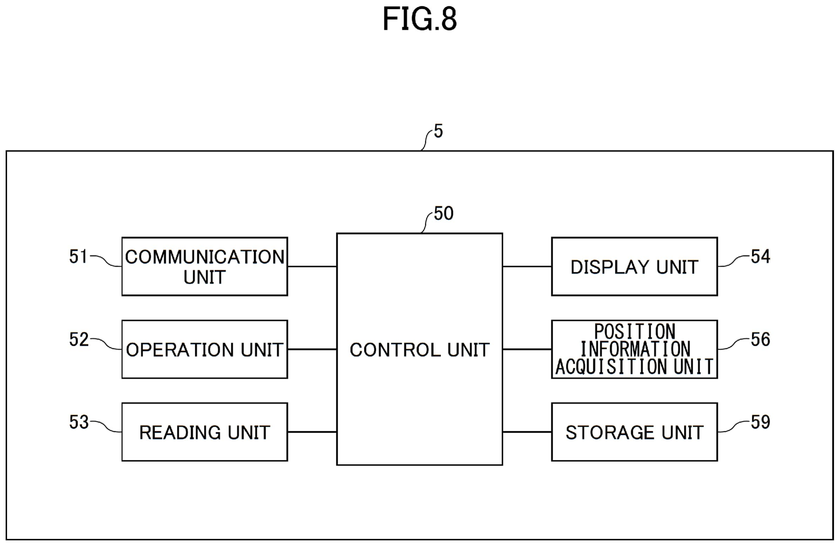

Next, a schematic configuration of the reading apparatus 5 will be described with reference to FIG. 8. FIG. 8 is a schematic configuration diagram of the reading apparatus.

As illustrated in FIG. 8, the reading apparatus 5 has a control unit 50, a communication unit 51, an operation unit 52, a reading unit 53, a display unit 54, a position information acquisition unit 56, and a storage unit 59.

Of these, the control unit 50 controls the entire reading apparatus 5, and is a computing device such as a CPU.

The communication unit 51 is a communication device for transmitting and receiving various kinds of information to and from other devices (a terminal, a server) via the communication network 100. The communication unit 41 can also transmit and receive various kinds of information to and from the transfer apparatus 3 by Wi-Fi or the like.

The operation unit 52 is a device for receiving operations from an operator, such as a touch panel.

The reading unit 53 is a device for writing various kinds of information into the wireless tag T or reading various kinds of information from the wireless tag T by short-range wireless communication such as RFID.

The display unit 54 is a display device for displaying a screen.

The position information acquisition unit 56 is a device for identifying the position of the reading apparatus 5 in the world by acquiring a GNSS satellite signal from a GNSS satellite. The reading apparatus 5 may not have the position information acquisition unit 56.

The storage unit 59 is a storage device such as a ROM, a RAM, or an SSD.

### <Configuration of the worker terminal>

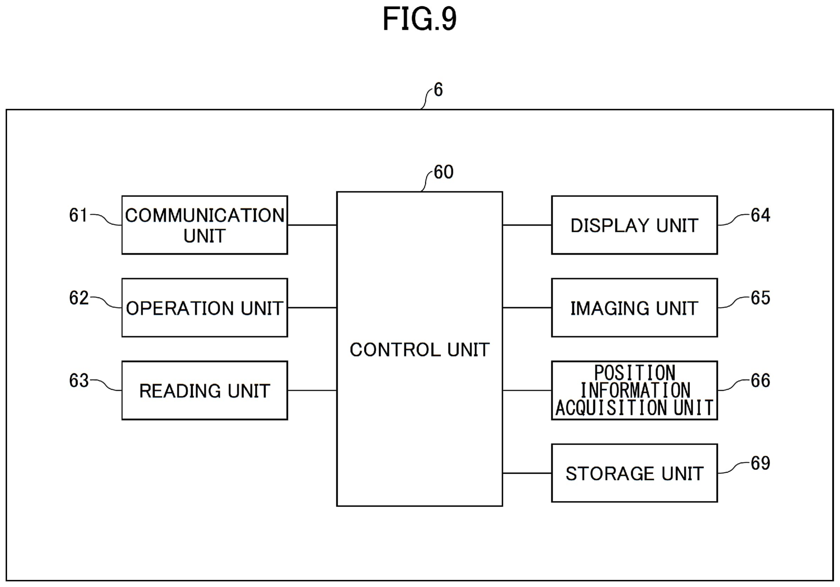

Next, a schematic configuration of the worker terminal 6 will be described with reference to FIG. 9. FIG. 9 is a schematic configuration diagram of the worker terminal.

As illustrated in FIG. 9, the worker terminal 6 has a control unit 60, a communication unit 61, an operation unit 62, a reading unit 63, a display unit 64, an imaging unit 65, a position information acquisition unit 66, and a storage unit 49.

Of these, the control unit 60 controls the entire worker terminal 6 and is a computing device such as a CPU.

The communication unit 61 is a communication device for transmitting and receiving various kinds of information to and from other devices (a terminal, a server) via the communication network 100.

The operation unit 62 is a device for receiving operations from an operator, such as a touch panel.

The reading unit 63 is a device for writing various kinds of information to the wireless tag T and reading various kinds of information from the wireless tag T by short-range wireless communication such as RFID.

The display unit 64 is a display device for displaying a screen.

The imaging unit 65 is a device for generating image data by imaging an object or a landscape, such as a CMOS (Complementary Metal Oxide Semiconductor) sensor or a CCD (Charge Coupled Device) sensor.

The position information acquisition unit 66 is a device for identifying the position of the worker terminal 6 in the world by acquiring a GNSS satellite signal from a GNSS satellite.

The storage unit 69 is a storage device such as a ROM, a RAM, or an SSD.

### <Configuration of the record management apparatus>

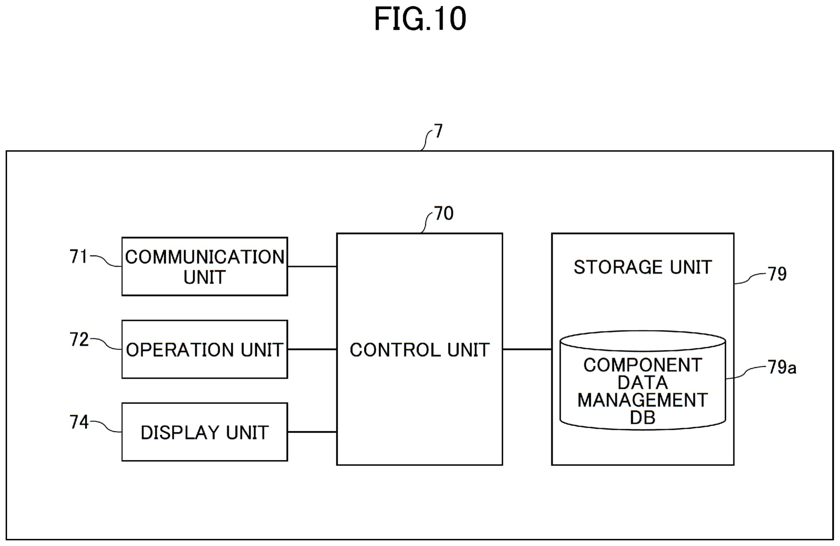

Next, a schematic configuration of the record management apparatus 7 will be described with reference to FIG. 10. FIG. 10 is a schematic configuration diagram of the record management apparatus 7.

As illustrated in FIG. 10, the record management apparatus 7 includes a control unit 70, a communication unit 71, an operation unit 72, a display unit 74, and a storage unit 79.

Of these, the control unit 70 controls the entire record management apparatus 7 and a computing device such as a CPU.

The communication unit 71 is a communication device for transmitting and receiving various kinds of information to and from other devices (a terminal, a server) via the communication network 100.

The operation unit 72 is a device for receiving operations from an operator, such as a keyboard and mouse.

The display unit 74 is a display device for displaying a screen.

The storage unit 79 is a storage device such as a ROM, a RAM, or an SSD. The storage unit 79 has a component data management DB (data base) 79a as described below.

### (Component data management table)

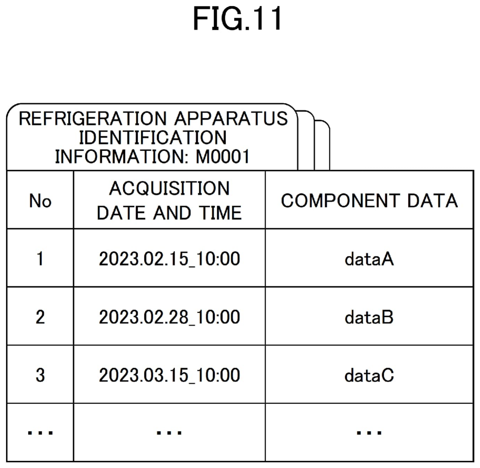

FIG. 11 is a conceptual diagram of a component data management table. The component data management DB 79a is composed of the component data management table illustrated in FIG. 11. In the component data management table, the acquisition date and time of the component data and the component data are managed in association with each piece of refrigeration apparatus identification information for identifying the refrigeration apparatus. The "acquisition date and time" is the date and time when the record management apparatus 7 acquired the component data from the worker terminal 6 or the like. Further, the component data are stored in the order of the acquisition date and time.

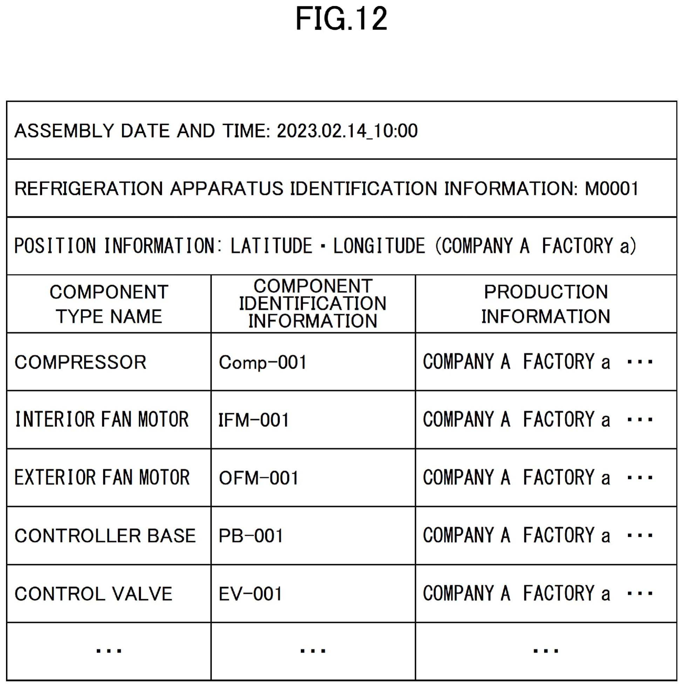

Each piece of the component data has a data structure illustrated in FIG. 12. FIG. 12 is a conceptual diagram of the component data. As illustrated in FIG. 12, each piece of the component data is managed by associating the component type name of each component of the refrigeration apparatus 2, the component identification information for identifying the components, and the production information about the components, with each assembly date and time of the refrigeration apparatus 2, the refrigeration apparatus identification information for identifying the refrigeration apparatus 2, and the position information of the assembly place of the refrigeration apparatus 2. In some cases, the replacement date and time of the components of the refrigeration apparatus 2 are indicated instead of the assembly date and time of the refrigeration apparatus 2.

### <Configuration of the production information management apparatus>

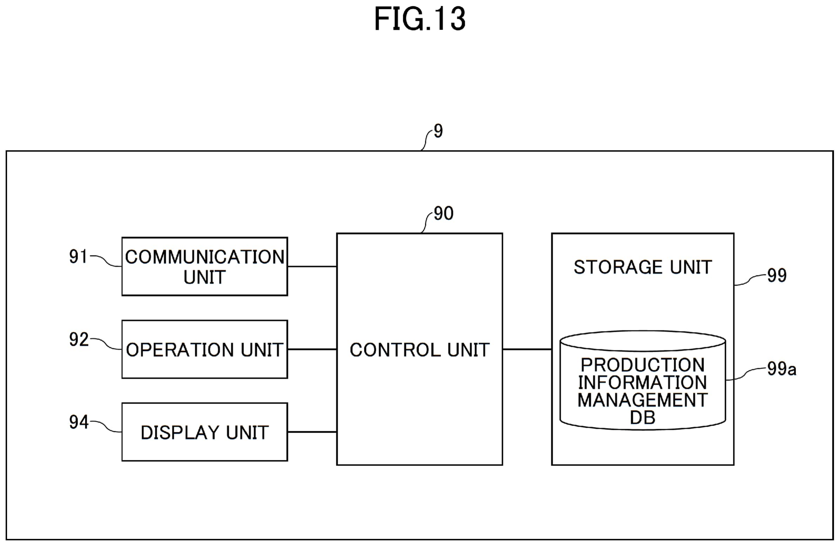

Next, a schematic configuration of the production information management apparatus 9 will be described with reference to FIG. 13. FIG. 13 is a schematic configuration diagram of the production information management apparatus 9.

As illustrated in FIG. 13, the production information management apparatus 9 includes a control unit 90, a communication unit 91, an operation unit 92, a display unit 94, and a storage unit 99.

Of these, the control unit 90 controls the entire production information management apparatus 9 and is a computing device such as a CPU.

The communication unit 91 is a communication device for transmitting and receiving various kinds of information to and from other devices (a terminal, a server) via the communication network 100.

The operation unit 92 is a device for receiving operations from an operator, such as a keyboard and mouse.

The display unit 74 is a display device for displaying a screen.

The storage unit 79 is a storage device such as a ROM, a RAM, or an SSD. The storage unit 99 has a production information management DB 99a as illustrated below.

### (Production information management table)

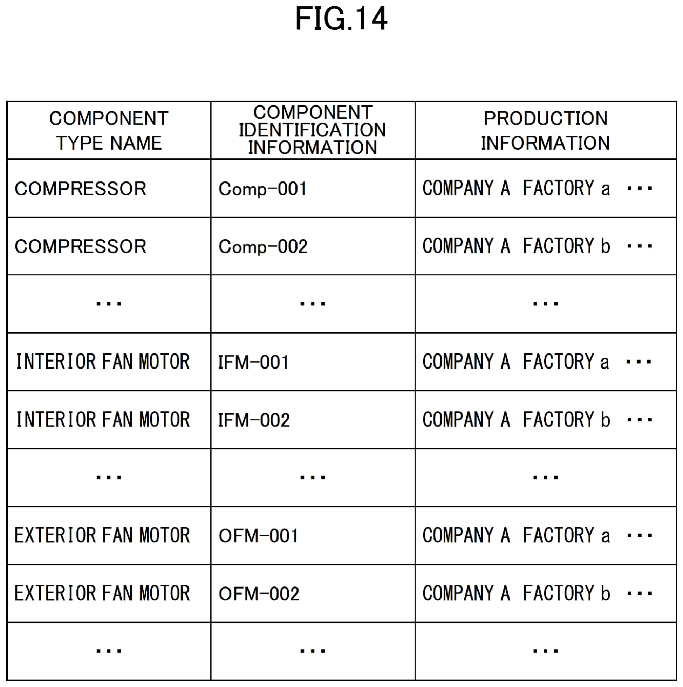

FIG. 14 is a conceptual diagram of the production information management table. The production information management DB 99a is composed of the production information management table illustrated in FIG. 14. The production information management table manages the component type names of the components of the refrigeration apparatus 2, component identification information for identifying the components, and production information related to the components in association with each other. Here, for example, information about each predetermined component of the refrigeration apparatus 2 that is genuine or approved by the producer is managed. When the component identification information is different even if the component type is the same, the respective pieces of component identification information are managed.

### [Processing or operation of communication system]

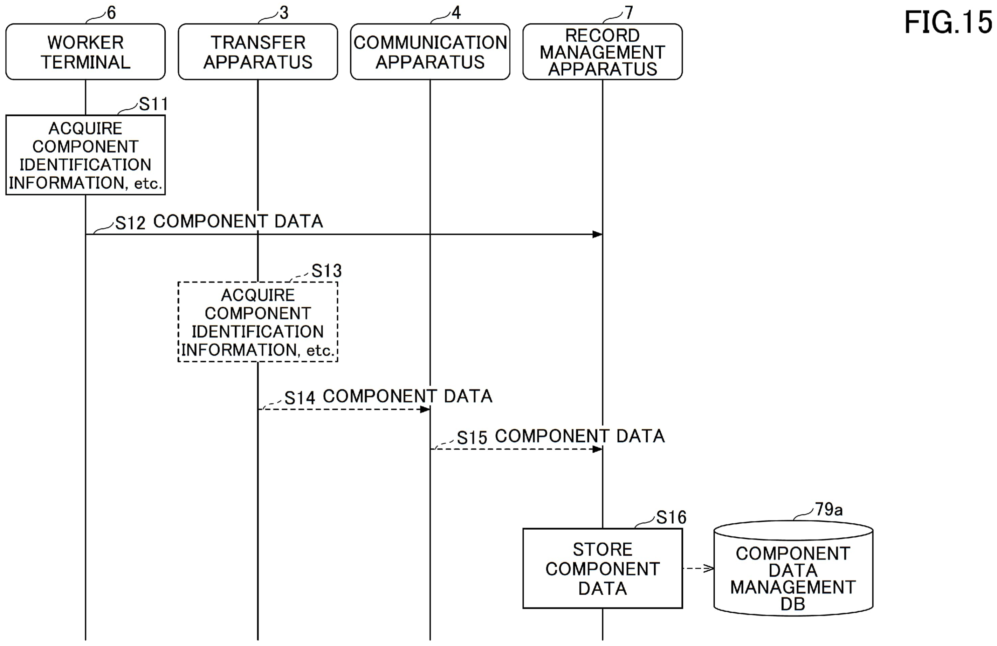

Next, the processing or operation of the communication system 1 will be described with reference to FIGS. 15 to 22.

### <Initial stage or repair stage>

First, the process of registering component data in the initial stage or repair stage will be described with reference to FIG. 15. FIG. 15 is a sequence diagram illustrating the process of registering component data in the initial stage or repair stage. Note that the initial stage indicates, for example, the time of the first factory shipment of the refrigeration apparatus 2.

S11: The worker terminal 6 acquires component identification information and the like of components of the refrigeration apparatus 2. As illustrated in FIG. 12, the component identification information and the like includes at least one of assembly date/time (or repair date/time), refrigeration apparatus identification information, position information, component type information, or production information in addition to the component identification information. The worker terminal 6 may acquire only component identification information of components of the refrigeration apparatus 2. As the acquisition methods, there are methods in which the operation unit 62 acquires component identification information and the like input by the worker, the reading unit 63 acquires component identification information and the like from the wireless tag T, and the control unit 60 acquires (reads) component identification information and the like from an identification image of a two-dimensional code and the like imaged by the imaging unit 65.

S12: The communication unit 61 of the worker terminal 6 transmits component data including component identification information and the like to the record management apparatus 7. The component data is, for example, data illustrated in FIG. 12. The communication unit 61 reads, from the storage unit 69, information for supplementing deficiencies in the component data, when the component data is deficient only by the component identification information and the like acquired by the worker terminal 6, and adds the read information to the component identification information and the like, thereby finally transmitting the component data as illustrated in FIG. 12. Thus, the communication unit 71 of the record management apparatus 7 receives the component data. In place of the processes S11 and S12, the processes S13 to S15 described later may be executed.

S13: The reading unit 33 of the transfer apparatus 3 acquires the component identification information and the like from the radio tag T attached to the component.

S14: Similarly to the process S12, the communication unit 31 of the transfer apparatus 3 reads, from the storage unit 39, the information for supplementing deficiencies in the component identification information and the like read by the reading unit 33, and adds the read information to the component identification information and the like, thereby transmitting the component data to the communication apparatus 4. Thus, the communication unit 41 of the communication apparatus 4 receives the component data.

S15: The communication unit 41 of the communication apparatus 4 transmits component data including component identification information and the like to the record management apparatus 7. This component data is, for example, data illustrated in FIG. 12. Thus, the communication unit 71 of the record management apparatus 7 receives the component data.

S16: In the record management apparatus 7, the control unit 70 stores the component data received in the process S12 or the process S15 in the component data management DB 79a in the order in which they were received.

### <Transportation stage>

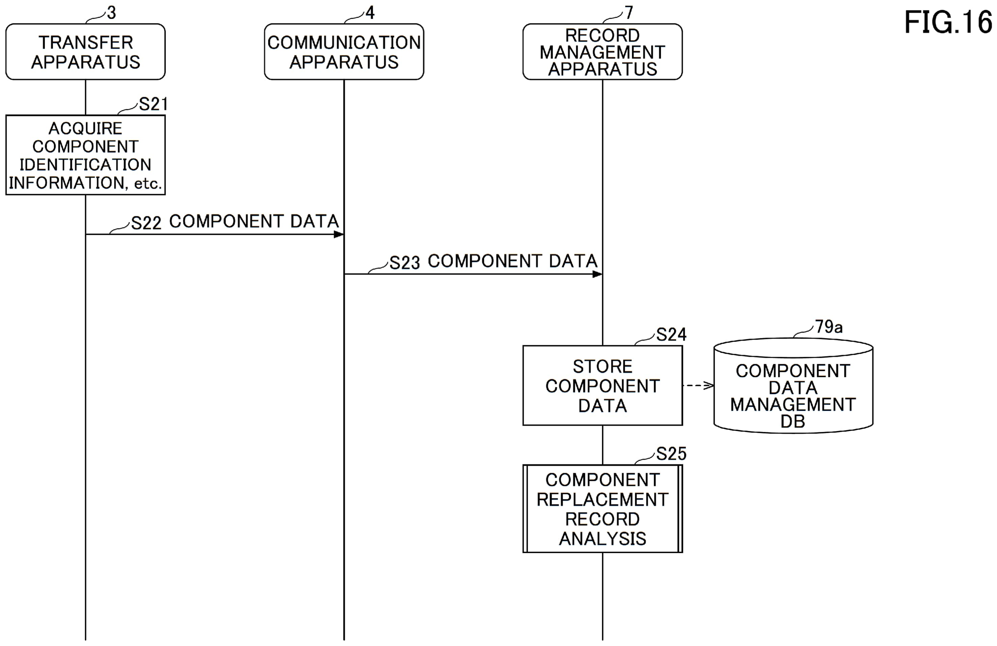

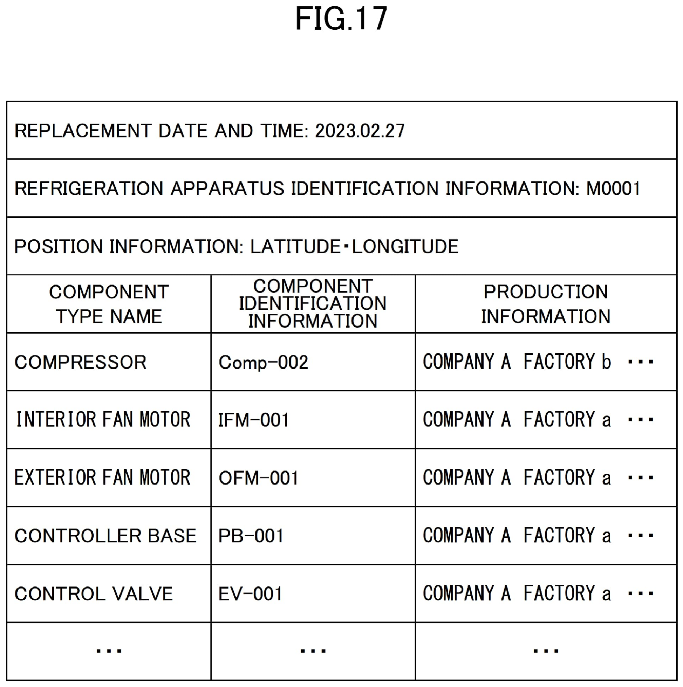

Next, the process of registering component data in the transportation stage of a container will be described with reference to FIGS. 16 and 17. FIG. 16 is a sequence diagram illustrating the process of registering component data in the transportation stage of a container. The transportation stage includes each stage of sea transportation and land transportation.

S21: Similar to the process S13, the reading unit 33 of the transfer apparatus 3 acquires the component identification information and the like from the radio tag T attached to the component.

S22: Similar to the process S14, the communication unit 31 of the transfer apparatus 3 reads, from the storage unit 39, the information for supplementing deficiencies in the component identification information and the like read by the reading unit 33, and adds the read information to the component identification information and the like, thereby transmitting the component data to the communication apparatus 4. Thus, the communication unit 41 of the communication apparatus 4 receives the component data.

S23: Similar to the process S15, the communication unit 41 of the communication apparatus 4 transmits the component data including the component identification information and the like to the record management apparatus 7. This component data is, for example, data illustrated in FIG. 17. FIG. 17 is a conceptual diagram of the component data transmitted in the transportation stage of the container. Thus, the communication unit 71 of the record management apparatus 7 receives the component data. The "position information" in this case indicates, for example, the position of the refrigeration apparatus 2 (container C) during sea transportation or land transportation.

S24: Similarly to the process S16, in the record management apparatus 7, the control unit 70 stores the component data received in the process S23 in the component data management DB 79a in the order in which they were received.

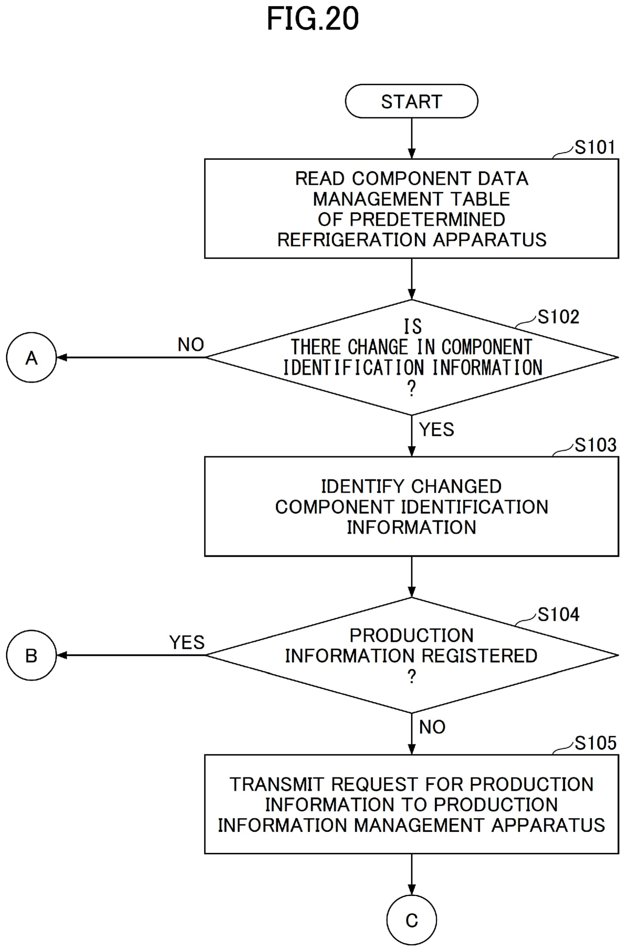

S25: Next, the record management apparatus 7 analyzes the replacement record of the components. This process will be described below in detail with reference to FIGS. 20 to 22.

### <Stage of passing through the centralized management gate>

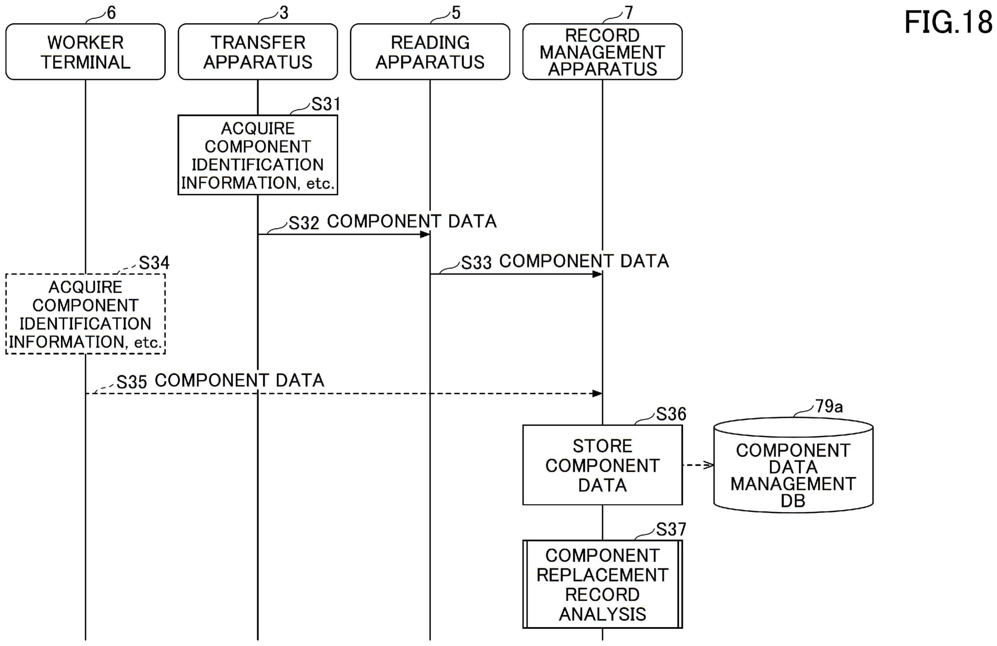

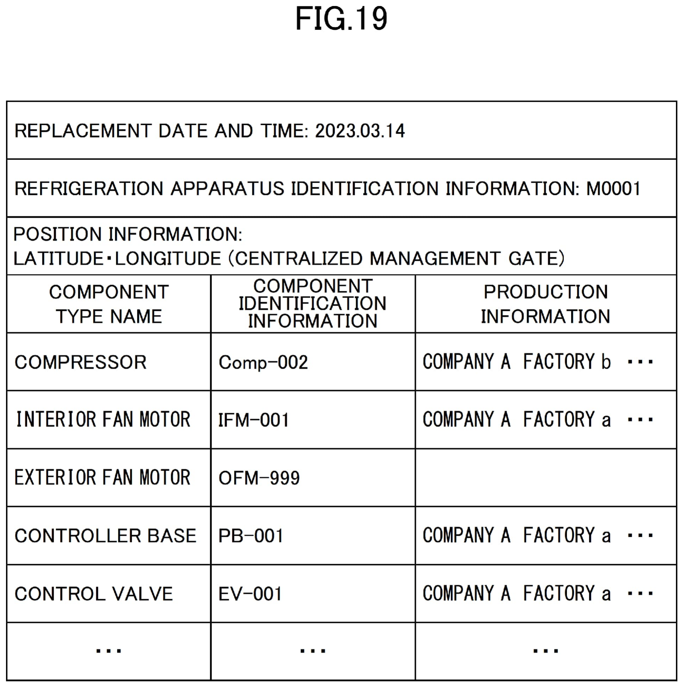

Next, FIGS. 18 and 19 are sequence diagrams illustrating the process of registering the component data in the transportation stage in which the truck TR loaded with the container C passes through the centralized management gate G. FIG. 18 is a sequence diagram illustrating the process of registering the component data in the transportation stage in which the truck loaded with the container passes through the centralized management gate.

S31: Similar to the process S13, the reading unit 33 of the transfer apparatus 3 acquires the component identification information and the like from the radio tag T attached to the component.

S32: Similar to the process S14, the communication unit 31 of the transfer apparatus 3 reads, from the storage unit 39, the information for supplementing deficiencies in the component identification information and the like read by the reading unit 33, and adds the read information for supplementing deficiencies in to the component identification information and the like, thereby transmitting the component data to the communication apparatus 4. Thus, the communication unit 41 of the communication apparatus 4 receives the component data.

S33: Similar to the process S15, the communication unit 41 of the communication apparatus 4 transmits the component data including the component identification information and the like to the record management apparatus 7. The component data is, for example, data illustrated in FIG. 19. Thus, the communication unit 71 of the record management apparatus 7 receives the component data. If an identification image such as a two-dimensional code is printed on the component of the refrigeration apparatus 2 instead of the radio tag T, the processes S34 and S35 described below may be executed instead of the processes S31 to S33.

S34: When the operator of the centralized management gate G operates the operation unit 72, the imaging unit 65 of the worker terminal 6 picks up an identification image such as a two-dimensional code, and the control unit 60 acquires (reads) the component identification information, etc., from the identification image.

S35: Similar to the process S12, the communication unit 61 of the worker terminal 6 transmits component data including the component identification information, etc., to the record management apparatus 7. This component data is, for example, data illustrated in FIG. 19. The communication unit 61 reads, from the storage unit 69, information for supplementing deficiencies in the component data, when the component data is deficient only by the component identification information, etc., acquired by the worker terminal 6, and adds the read information to the component identification information, etc., and finally transmits component data as illustrated in FIG. 12. Thus, the communication unit 71 of the record management apparatus 7 receives the component data.

S36: Similarly to the process S16, in the record management apparatus 7, the control unit 70 stores the component data received in the process S33 or S35 in the component data management DB 79a in the order in which they were received.

S37: The record management apparatus 7 analyzes the component replacement record. This process will be described in detail below with reference to FIGS. 20 to 22.

### <Component replacement record analysis>

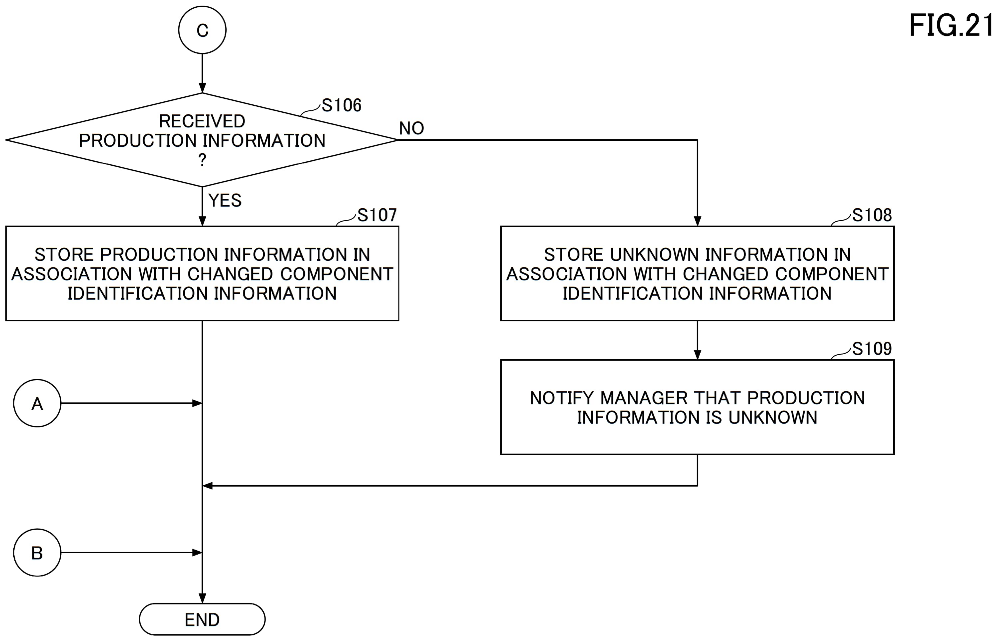

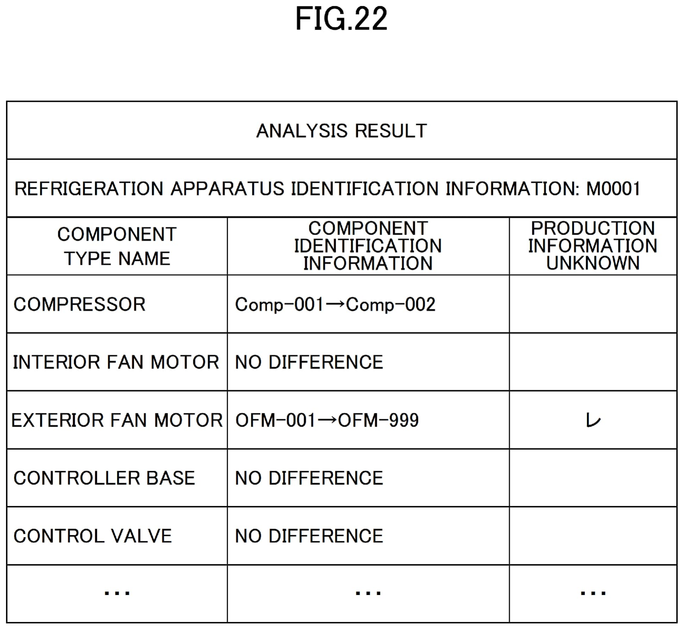

Next, the processes S25 and S37 (component replacement record analysis) will be described in detail with reference to FIGS. 20 to 22. FIGS. 20 and 21 are flowcharts illustrating the process of component replacement record analysis. FIG. 22 is a diagram illustrating the analysis result.

S101: The control unit 70 reads the corresponding component data management table from the component data management DB 79a, by using predetermined refrigeration apparatus identification information included in the component data received by the communication unit 71, as a retrieval key.

S102: The control unit 70 determines whether the component identification information (an example of the second component identification information) of the predetermined type of component stored this current time, has been changed from the component identification information (an example of the first component identification information) of the same predetermined type of component stored previous time. For example, FIG. 22 illustrates the result of determining that the component identification information of the component type "compressor" has been changed from "Comp-001" to "Comp-002". Also, the result of determining that the component identification information of the component type "exterior fan motor" has been changed from "OFM-001" to "OFM-999" is illustrated. Note that the previous time is an example of a "first time point" and the current time is an example of a "second time point". When distinguishing between the previous time and the current time, the control unit 70 may refer to the assembly date and time (replacement date and time) included in the component data or to the acquisition date and time when the record management apparatus 7 acquired the component data as illustrated in FIG. 11.

S103: When the control unit 70 determines that there is a change in the process S102 (S102; YES), the control unit 70 identifies the component identification information that has changed.

S104: The control unit 70 determines whether the production information has been registered in the component data including the identified component identification information.

S105: If the production information has not been registered (S104; NO), the communication unit 71 transmits a request for the production information to the production information management apparatus 9. This request includes the component identification information identified in the process S103. Thus, the communication unit 91 of the production information management apparatus 9 receives the request for the production information. Then, in the production information management apparatus 9, the control unit 90 uses the component identification information received in the process S105 as a retrieval key to retrieve the corresponding production information in the production information management DB 99a. In the production information management DB 99a, there are cases in which the corresponding production information is managed because the component is a genuine component, etc., and cases in which the corresponding production information is not managed because the component is not a genuine component, etc. Then, the communication unit 91 of the production information management apparatus 9 transmits, to the record management apparatus 7 that is the requester, the managed production information, or transmits information indicating that the corresponding production information is not managed because it is not managed.

S106: In the record management apparatus 7, the control unit 70 determines whether the production information is received by the communication unit 71.

S107: If the production information is received (S106: YES), the control unit 70 stores the production information determined to be received in the process S106 in association with the changed component identification information (the component identification information identified in the process S103). Thus, the process of analyzing the replacement record of the components is completed.

S108: On the other hand, if the production information is not received (S106: NO), the control unit 70 associates and stores a predetermined flag indicating that the production information is unknown, in association with the changed component identification information (the component identification information identified in the process S103) as illustrated in FIG. 22.

S109: The control unit 70 notifies the manager of the record management apparatus 7 via the display unit 74 of information indicating that the production information is unknown. This information includes the component identification information and the component type name identified in the process S103. Note that the communication unit 71 may transmit the information indicating that the production information is unknown to a predetermined manager terminal used by the manager of the record management apparatus 7. As a result, the manager of the record management apparatus 7 can recognize that there is a trace that a component which is not genuine or the like has been installed.

If the determination is NO in the process S102 and YES in the process S104, the analysis of the replacement record of the component ends.

### [Effect of embodiment]

For example, in a case where a package is loaded in a container C and transported by sea from a first country to a second country, and the package is replaced with another package in the second country and transported by sea to a third country, even if a component of the refrigeration apparatus 2 is replaced, it is difficult to identify where (in which country or region) the component is replaced. On the other hand, according to this embodiment, the record management apparatus 7 determines whether the component identification information has been changed based on the change record of the component identification information obtained from the communication apparatus 4 installed in the container C, the reading apparatus 5 installed in the centralized management gate G, or the worker terminal 6. Thus, traceability of the components of the refrigeration apparatus 2 can be implemented. Also, the manager of the record management apparatus 7 can identify or estimate that a predetermined type of component has been replaced based on the change of the component identification information.

(2) The record management apparatus 7 determines that a predetermined type of component has been replaced based on the fact that the second component identification information has been changed from the first component identification information. Thus, the manager of the record management apparatus 7 can recognize that a predetermined type of component has been replaced.
(3) The record management apparatus 7 can determine whether the second component identification information has been changed from the first component identification information based on the before-after relationship between the first time point and the second time point.
(4) Even if the record management apparatus 7 does not manage the production information, the production information can be obtained from the production information management apparatus. Thus, the manager of the record management apparatus 7 can obtain more detailed information in implementing the traceability of the components of the refrigeration apparatus 2. Further, the manager of the record management apparatus 7 can recognize that the components are not genuine by a predetermined flag.

### [Supplement]

(1) The control units 20, 30, 40, 50, 60, 70, and 90 execute processing by each program, and each program can be recorded on a (non-transitory) recording medium or can be provided via the communication network 100.
(2) The worker terminal 6 may be a smartphone, a tablet terminal, a notebook computer, or a desktop computer.

### [Relationship to the basic application]

The present international application is based upon and claims priority to Japanese patent application no. 2023-69559 filed on April 20, 2023, the entire contents of which are incorporated herein by reference.

### Reference Signs List

1 communication system
2 refrigeration apparatus
3 transfer apparatus
4 communication apparatus
5 reading apparatus
6 worker terminal (an example of a communication terminal)
7 record management apparatus
9 production information management apparatus
70 control device
71 communication unit
72 operation unit
74 display unit
79 storage unit
C container
TR truck (example of a mobile body)
V ship (example of a mobile body)

## Claims

1. A record management apparatus (7) for managing a record of a change relating to a refrigeration apparatus provided in a container (C) to be transported, the record management apparatus (7) comprising:
a communication unit (71) configured to acquire first component identification information for identifying a predetermined type of a component included in the refrigeration apparatus at a first time point and second component identification information for identifying the predetermined type of the component forming the refrigeration apparatus at a second time point after the first time point; and
a control unit (70) configured to implement control to determine whether the second component identification information has been changed from the first component identification information.

2. The record management apparatus (7) according to claim 1, wherein when the second component identification information has been changed from the first component identification information, the control unit (70) determines that the predetermined type of the component has been replaced.

3. The record management apparatus (7) according to claim 1, wherein
the communication unit (71) acquires first time point information indicating the first time point together with the first component identification information, and acquires second time point information indicating the second time point together with the second component identification information, and
the control unit determines whether the second component identification information has been changed from the first component identification information based on a before-after relationship between the first time point and the second time point.

4. The record management apparatus (7) according to claim 1, further comprising:
a storage unit configured to store the first component identification information and the second component identification information acquired by the communication unit.

5. The record management apparatus (7) according to claim 4, wherein
when the second component identification information has been changed from the first component identification information and the communication unit (71) has not acquired production information relating to production of a predetermined component indicated by the second component identification information, the communication unit acquires the production information from a production information management apparatus configured to manage the production information of each component; and
the storage unit (79) stores the production information in association with the second component identification information.

6. The record management apparatus (7) according to claim 5, wherein the production information includes information indicating a place where the predetermined component was replaced, a date and time when the predetermined component was replaced, a replacing person who replaced the predetermined component, or a place where the predetermined component was stored.

7. The record management apparatus (7) according to claim 4, wherein
when the second component identification information has been changed from the first component identification information and the communication unit has not acquired production information related to production of a predetermined component indicated by the second component identification information, the communication unit (71) makes a request for the production information to a production information management apparatus configured to manage the production information of each component, and
when the communication unit (71) cannot acquire the production information in response to the request, the storage unit (79) stores a predetermined flag in association with the second component identification information.

8. The record management apparatus (7) according to any one of claims 1 to 6, wherein the communication unit (71) acquires the second component identification information transmitted by a communication apparatus provided in the container (C) or in a mobile body (TR) loaded with the container (C).

9. The record management apparatus (7) according to any one of claims 1 to 7, wherein the communication unit acquires the second component identification information transmitted by a communication apparatus provided at a gate through which a mobile body (TR) mounted with the container (C) passes.

10. A communication system (1) comprising:
a communication apparatus (4) configured to be installed in the container (C) or a mobile body (TR) mounted with the container (C), and to transmit the second component identification information; and
the record management apparatus (7) according to any one of claims 1 to 7.

11. The communication system (1) according to claim 10, further comprising:
a transfer apparatus configured to be installed in the container (C) or the mobile body (TR) loaded with the container (C), to read, by short-range radio communication, the second component identification information from a radio tag (T) in which the second component identification information is written, and to transmit the second component identification information to the communication apparatus.

12. The communication system (1) according to claim 11, wherein the radio tag (T) is an RFID tag that can be attached to the predetermined type of the component, the refrigeration apparatus, or the container (C), and in which the second component identification information is written.

13. The record management apparatus (7) according to claim 1, wherein the communication unit (51) acquires the second component identification information transmitted by a communication terminal that has read the second component identification information from an identification image in which the second component identification information is embedded.
